# DEMANDE DE BREVET EUROPEEN

(11) **EP 2 597 619 A1**
(43) Date de publication de la demande: **29.05.2013**
(21) Numéro de dépôt: 12192869.1
(22) Date de dépôt: 15.11.2012
(51) Int. Cl.: G06T 15/20

(54) **Procede et dispositif de representation d'environnements synthetiques.**

(30) Priorité: 24.11.2011 FR 1103579
(71) Demandeur: Thales, 92200 Neuilly Sur Seine (FR)
(72) Inventeur: James, Yannick, 95523 CERGY PONTOISE Cedex (FR)
(74) Mandataire: Bordier, Sylvain

(57) **Abrégé**

La présente invention concerne un procédé et un dispositif de représentation d'environnements synthétiques. Le dispositif de représentation comporte notamment un détecteur de position (57) de l'observateur (5), un générateur d'images de synthèses (51), un module de transformation dynamique conforme produisant un rendu en deux dimensions d'une scène en trois dimensions, ledit rendu étant affiché par un dispositif d'affichage calibré (55) L'invention peut être mise en oeuvre dans le domaine de la simulation d'engins mobiles comme des hélicoptères, des avions, des camions.

## Description

La présente invention concerne un procédé et un dispositif de représentation d'environnements synthétiques. L'invention peut être mise en oeuvre dans le domaine de la simulation d'engins mobiles comme des hélicoptères, des avions, des camions. Ladite simulation d'engins mobile a notamment pour objectif de réaliser un entrainement du conducteur et des éventuels copilotes, dans le cadre d'un apprentissage, d'un perfectionnement.

Dans le domaine de la réalité virtuelle, ou encore de la réalité augmentée, un objectif des logiciels de représentation d'environnements synthétiques est d'immerger les utilisateurs, dans une scène visuelle qui recrée artificiellement un environnement réel, symbolique ou imaginaire. La scène visuelle est construite notamment à partir de données décrivant la géométrie de la scène dans l'espace, les textures, les couleurs et d'autres propriétés de la scène, stockées dans une base de données, dite base de donnée 3D, pour trois dimensions. La scène virtuelle est usuellement traduite en images vidéo en deux dimensions par un générateur d'images à base de processeurs graphiques. Les images vidéo en deux dimensions ainsi obtenues sont nommées « images de synthèse ». Les images de synthèse sont observables par un utilisateur, ou un observateur, au moyen d'un ou plusieurs écrans d'affichage.

Dans le domaine de la simulation ou de la réalité virtuelle, une bonne immersion visuelle de l'observateur est en grande partie liée à la grandeur du champ visuel reconstitué autour de l'observateur. Le champ visuel est d'autant plus important que le nombre d'écrans est grand. Par exemple, un seul écran standard permet en général d'observer un petit champ de soixante degrés en horizontal par quarante degrés en vertical environ. Un système d'affichage avec un écran sphérique, ou cubique retro-projeté par plusieurs projecteurs par exemple, permet d'observer la totalité du champ visuel possible soit trois cent soixante degrés dans toutes les directions. Ce type d'affichage est réalisé dans des sphères de grandes dimensions ou avec des miroirs de renvoi à l'infini, particulièrement coûteux.

Le coût d'un simulateur dépend également en grande partie de sa taille et de son encombrement. L'encombrement d'un simulateur est directement lié à son dispositif de représentation d'environnement. Afin de réduire l'encombrement du simulateur, une solution peut être de rapprocher l'affichage de l'observateur. Dans le domaine de la simulation, les écrans d'affichage sont situés environ à deux et demi, trois mètres de l'observateur. Or lorsque les écrans d'affichage sont proches de l'observateur, notamment à moins de deux mètres, des aberrations géométriques important apparaissent dans l'image de synthèse perçue par l'observateur. Les aberrations géométriques sont nommées erreurs de parallaxe. Les erreurs de parallaxe sont préjudiciables à la qualité d'un entrainement.

Dans le domaine de la simulation, des jeux vidéo, de la réalité virtuelle, les erreurs de parallaxes sont corrigées par un détecteur de position de tête. Cependant, ce dispositif ne fonctionne pas pour les systèmes d'affichages statiques.

Un but de l'invention est notamment de pallier les inconvénients précités. A cet effet, l'invention a pour objet un procédé et un dispositif de représentation d'environnements tel que décrit dans les revendications.

L'invention a notamment pour avantage de supprimer les erreurs de parallaxe, quelle que soit la position de l'observateur par rapport à l'écran et quels que soient les types d'écrans.

D'autres caractéristiques et avantages de l'invention apparaîtront à l'aide de la description qui suit, donnée à titre illustratif et non limitatif, et faite en regard des dessins annexés qui représentent :
- la figure 1 : un schéma d'un canal d'affichage selon l'état de la technique ;
- la figure 2 : une première pyramide de vision selon l'état de la technique ;
- la figure 3 : un schéma d'un générateur d'images de synthèse avec écran calibré selon l'état de la technique ;
- la figure 4 : un exemple d'erreur de parallaxe ;
- la figure 5 : un schéma d'une chaine de production d'images selon l'invention ;
- la figure 6 : les principaux calcule d'une chaine de production d'images selon l'invention ;
- la figure 7a : une pyramide de vision initiale ;
- la figure 7b : une pyramide de vision dynamique ;
- la figure 8a : une pyramide de vision initiale pour un écran sphérique ;
- la figure 8b : une pyramide de vision dynamique pour un écran sphérique.

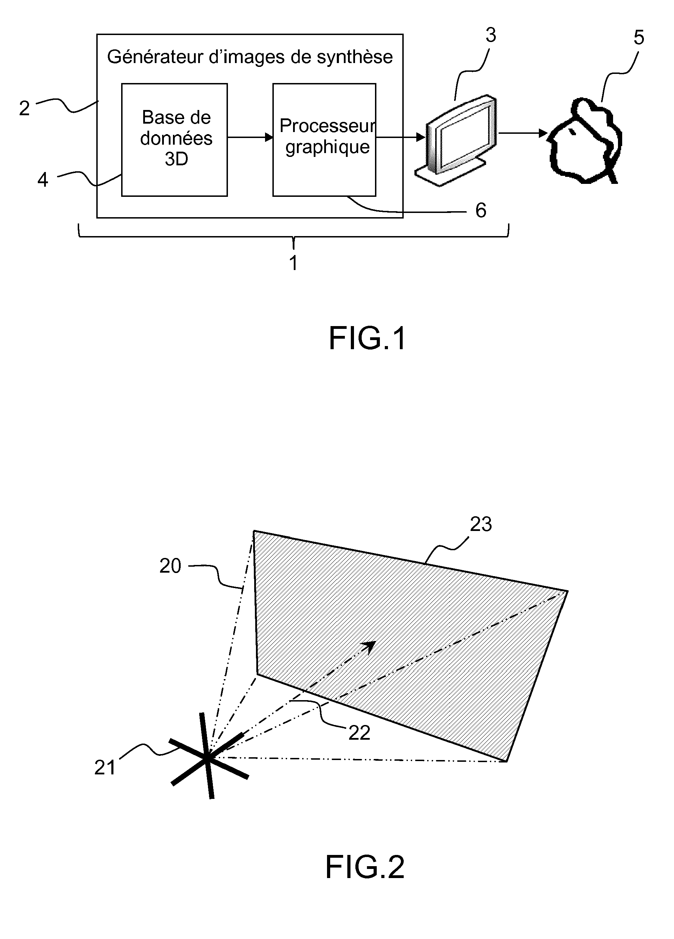

La figure 1 représente un dispositif 1 permettant un affichage d'une scène visuelle sur un écran, aussi nommé premier canal d'affichage 1. Le premier canal d'affichage 1 est typiquement utilisé dans un simulateur pour la restitution d'un environnement virtuel à destination d'un utilisateur, ou observateur 5. Chaque premier canal d'affichage 1 comprend un premier générateur d'images de synthèses 2 et un premier moyen d'affichage 3. Le premier générateur de synthèse 2 comporte une première base de données en trois dimensions 4 comportant les caractéristiques de la scène à visualiser. Le générateur d'images de synthèse comporte en outre un processeur graphique 6 adapté à la conversion d'une scène en trois dimensions en une image virtuelle en deux dimensions. Le processeur graphique 6 peut être remplacé par un logiciel équivalent effectuant la conversion d'une scène en trois dimensions en une image virtuelle en deux dimensions.

La figure 2 représente un exemple d'une conversion d'une scène en trois dimensions en une image virtuelle. Différentes méthodes de conversions peuvent être utilisées afin de passer d'une scène en trois dimensions en une image virtuelle en deux dimensions. Une méthode bien adaptée pour recréer artificiellement un environnement visuel réel se nomme « perspective conique ». La représentation en perspective conique aussi nommée, « projection centrale », est la transformation usuellement utilisée en réalité virtuelle, en réalité augmentée, en simulation et dans les jeux vidéo. La projection centrale peut être définie géométriquement dans l'espace par une première pyramide dite de vision 20, positionnée et orientée dans le monde virtuel créé dans la première base de données en trois dimensions 4. L'observateur 5 est positionné 21 au sommet de la première pyramide de vision 20. L'observateur 5 regarde en direction d'une première ligne de visée 22. L'image vue par l'observateur 5 correspondant à une surface plane 23 sensiblement perpendiculaire à la première ligne, ou axe, de visée 22. La surface plane 23 est notamment délimitée par les bords de la première pyramide de vision 20.

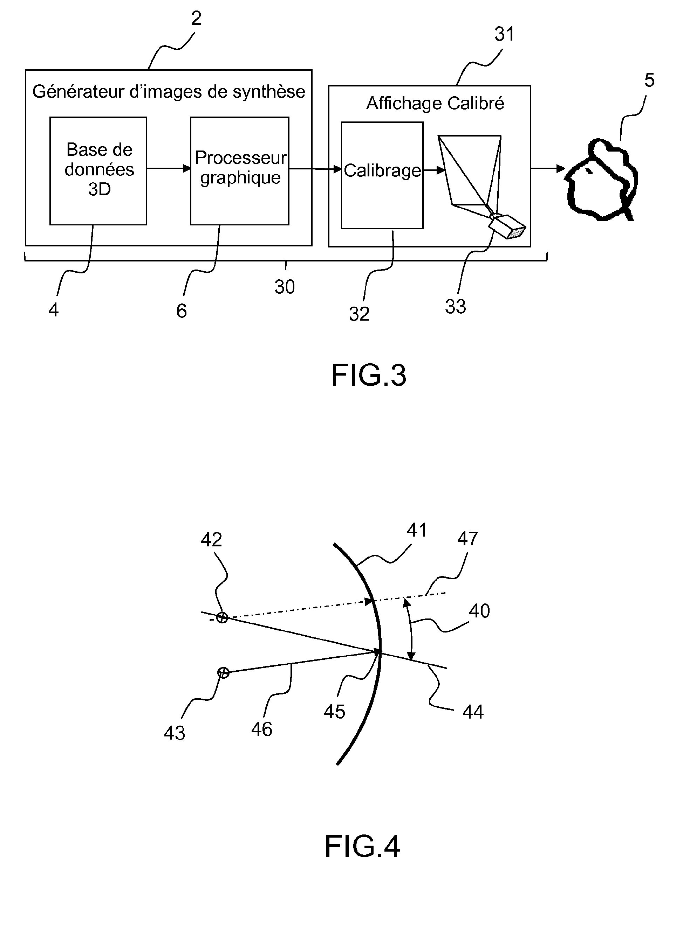

La figure 3 représente un deuxième canal d'affichage calibré 30 selon l'état de la technique. En pratique, dans les domaines de la réalité virtuelle, de la réalité augmentée et en simulation, une bonne immersion visuelle d'un observateur 5 utilise notamment une transformation d'une scène en trois dimensions en une image virtuelle en deux dimensions, réalisée avec une perspective conique ou projection centrale, quelque soit le dispositif d'affichage. Lorsque l'affichage des éléments en trois dimensions de la première base de données en trois dimensions 4, permet à l'observateur 5 d'estimer correctement les distances relatives des éléments en trois dimensions, alors le dispositif d'affichage est dit calibré 31. Afin de réaliser une calibration du dispositif d'affichage 31 pour des écrans de nature diverse, comme des écrans plats, cylindriques, sphériques, toriques, un dispositif de calibration 32 est inséré dans le deuxième canal d'affichage 30, entre le générateur d'images 2 et un deuxième dispositif d'affichage 33. Le dispositif de calibration 32 effectue la calibration du deuxième dispositif d'affichage par exemple au démarrage du simulateur. En effet, une fois la calibration établie, il n'est pas nécessaire de la recalculer à chaque affichage d'une image virtuelle.

La figure 4 représente un exemple d'erreur de parallaxe 40. Une erreur de parallaxe peut intervenir lorsqu'un canal d'affichage calibré sans détection de position des yeux de l'observateur 5 ou sans utilisation d'un dispositif d'affichage porté sur la tête de l'observateur 5 comme un visuel de casque. L'observateur 5 ne peut voir la scène avec une projection centrale que lorsqu'il est situé à une première position 42 de l'espace devant un premier écran 41. La première position 42 dépend de paramètres d'une première pyramide de vision initiale utilisée, telle que la première pyramide de vision 20 représentée sur la figure 2, pour calibrer l'affichage, ainsi que de la taille et la position du premier écran 41. La première position 42 peut être nommée position initiale 42 et se trouve au sommet de la première pyramide de vision initiale 20. Ainsi, lorsque les écrans sont à une distance proche de l'observateur 5, des aberrations géométriques importantes apparaissent lorsque les yeux de l'observateur s'écartent de la position initiale 42. Sur la figure 4, l'observateur est par exemple à une deuxième position 43. L'erreur de parallaxe 40 peut alors être définie comme un angle 40 entre une première ligne de visée 44 partant de la position initiale 42 et intersectant le premier écran 41 en un premier point 45 et une droite parallèle 47 à une deuxième ligne de visée 46 partant de la deuxième position 43 de l'observateur 5, ladite droite parallèle 47 passant par la position initiale 42.

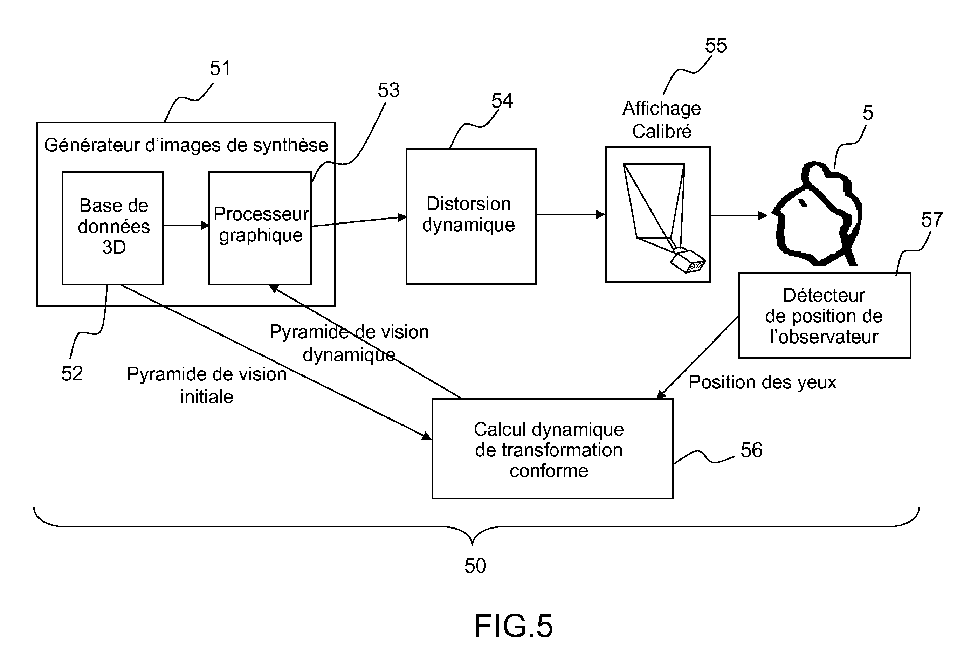

La figure 5 représente un dispositif de représentation d'environnements virtuels 50 selon l'invention. Le dispositif de représentation d'environnement virtuel est un deuxième canal d'affichage 50 selon l'invention. Le dispositif de représentation d'environnement 50 comporte un deuxième générateur d'images de synthèse 51 comportant une deuxième base de données en trois dimensions 52. La deuxième base de données en trois dimensions 52 comporte les mêmes informations que la première base de données en trois dimensions 4. La troisième base de données en trois dimensions 52 comporte en outre une description de la première pyramide de vision initiale 20. Le deuxième générateur d'images de synthèse 51 comporte également un deuxième processeur graphique 53 prenant en entrée une pyramide de vision dynamique pour transformer la scène en trois dimensions en une image virtuelle en deux dimensions. Une pyramide de vision dynamique est créée par un module de calcul d'une transformation conforme dynamique 56. Le calcul de transformation conforme dynamique 56 utilise comme données d'entrée :
- la description de la pyramide de vision initiale 20, transmise par exemple par le deuxième générateur d'images de synthèse 51 ;
- une description géométrique du deuxième dispositif d'affichage calibré de l'image virtuelle 33, représenté sur la figure 3 ;
- un positionnement des yeux, de la tête de l'observateur 5 en temps réel.

Le calcul de transformation conforme dynamique prend par exemple en compte la position, l'orientation, la forme de l'écran par rapport à l'observateur 5. Un objectif du calcul de transformation conforme dynamique est notamment de corriger les images de synthèse affichées pour en supprimer les aberrations géométriques potentiellement visible par l'observateur 5. Avantageusement, le calcul de transformation conforme dynamique permet d'obtenir une projection centrale exacte de l'image virtuelle perçue par l'observateur 5 quelle que soit la position de l'observateur devant l'écran.

Le calcul d'une transformation conforme dynamique est donc réalisé en temps réel et prend en compte les mouvements des yeux ou de la tête de l'observateur afin de calculer en temps réel une nouvelle pyramide de vision dite dynamique. La position des yeux ou de la tête peut être donnée par un dispositif de calcul de la position des yeux ou de la tête en temps réel 57, aussi nommé en langage anglo-saxon eye tracker, signifiant littéralement poursuite des yeux, ou head tracker, signifiant littéralement poursuite de la tête. Le dispositif de calcul de la position des yeux ou de la tête de l'observateur prend en compte des données provenant de capteurs de position.

L'image virtuelle en deux dimensions créée par le deuxième processeur graphique 53 peut être transmise à un opérateur de distorsion dynamique 54. Avantageusement un opérateur de distorsion dynamique 54 permet d'afficher une image virtuelle sans aberrations géométriques sur un ou plusieurs écrans courbes ou sur un dispositif d'affichage comportant plusieurs écrans jointifs, chaque écran constituant un dispositif d'affichage indépendant des autres écrans. Dans le cas d'un affichage multicanaux, le dispositif de représentation d'environnement est dupliqué en autant de fois qu'il y a de canaux d'affichage. L'ensemble des canaux d'affichages peuvent former une seule image sous forme d'une mosaïque, ou plusieurs images positionnées n'importe où dans l'espace autour de l'observateur 5.

Ensuite l'image virtuelle est transmise à un troisième dispositif d'affichage 55 préalablement calibré par un dispositif de calibrage 32 représenté sur la figure 3. L'image virtuelle affichée par le dispositif d'affichage 55 est alors perçue par un observateur 5.

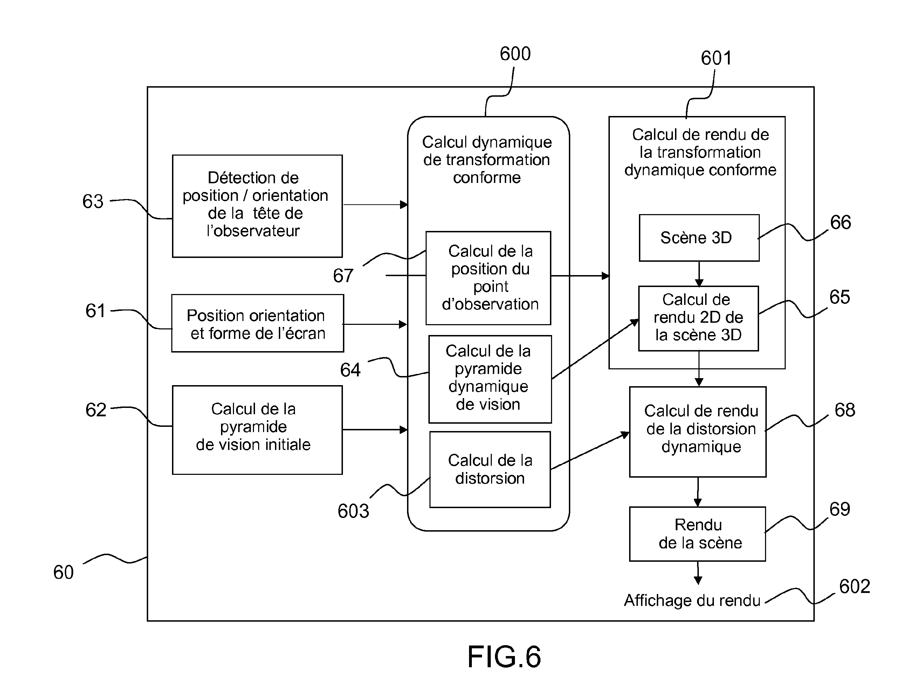

La figure 6 représente différentes étapes possibles pour le procédé de représentation d'environnements 60 selon l'invention. Le procédé de représentation d'environnements 60 selon l'invention comporte notamment un calcul dynamique de transformation conforme 600, puis un calcul de rendu de la transformation dynamique conforme 601.

Une première étape préalable au procédé selon l'invention peut être une étape construction 62 d'une pyramide de vision initiale 20 par le générateur d'images de synthèse 51, représenté sur la figure 5. Une deuxième étape préalable au procédé selon l'invention peut être une étape de calibrage du dispositif d'affichage 55 représenté sur la figure 5. L'étape de calibrage utilise la pyramide de vision initiale 20, calculée au cours de la première étape préalable 62. Dans un autre mode de réalisation, le processus de calibrage peut être un processus itératif au cours duquel peut être recalculée la pyramide de vision initiale. Une troisième étape préalable au procédé 60 selon l'invention est une étape de description de formes, positions et autres caractéristiques physiques 61 du dispositif d'affichage 55, représenté sur la figure 5. Les données de description du dispositif d'affichage 55 peuvent par exemple être sauvegardées dans une base de données, pour être mises à disposition des différents calculs réalisés au cours du procédé 60 selon l'invention.

Une première étape du procédé selon l'invention peut être une étape de détection de chaque nouvelle position de l'oeil de l'observateur et/ou de chaque nouvelle position et éventuellement orientation de la tête de l'observateur 5. La position des yeux, et/ou la position et éventuellement l'orientation de la tête sont transmises au module de calcul dynamique de transformation conforme 56, tel que représenté sur la figure 5.

Une deuxième étape du procédé selon l'invention peut être une étape de calcul d'une position d'un point d'observation 67 déterminée en fonction de chaque position et orientation de la tête de l'observateur 63. L'étape de calcul d'une position d'un point d'observation 67 peut faire partie du calcul dynamique de transformation conforme 600. La position du point d'observation peut être déduite de données produites par un détecteur de position des yeux. Une position du point d'observation est calculée comme étant une position médiane entre les deux yeux de l'observateur. Il est aussi possible selon le contexte de prendre comme position du point d'observation une position de l'oeil droit, une position de l'oeil gauche, voire même un point quelconque de la tête de l'observateur ou encore un point proche de la tête de l'observateur dans le cas de l'utilisation d'un simple détecteur de position de tête. Dans le cas de l'utilisation d'un détecteur de position de tête, les erreurs géométriques d'affichage par le procédé 60 selon l'invention sont plus importantes mais restent avantageusement acceptables suivant l'utilisation finale qui peut en être faite. Pour la suite du procédé selon l'invention, une position de l'observateur peut être définie comme un écart entre la position du point d'observation et la position initiale 42 utilisée pour le calibrage du troisième dispositif d'affichage 55.

Une troisième étape du procédé selon l'invention peut être une étape de calcul d'une pyramide de vision dynamique 64. Une nouvelle pyramide de vision dynamique 64 est calculée en temps réel pour chaque position de la tête ou des yeux de l'observateur 5. Le calcul d'une pyramide de vision dynamique 64 s'effectue notamment en fonction d'une configuration 61 du système de restitution d'images, c'est-à-dire du dispositif d'affichage 55. Le calcul de la pyramide de vision dynamique se base sur une modification de la pyramide de vision initiale 20 afin que le champ visuel réel observé englobe complètement une surface d'affichage initiale, en tenant compte de la position du point d'observation transmis par le calcul dynamique de transformation conforme 56. Une surface d'affichage initiale est une surface appartenant à la surface d'un deuxième écran 55, ou troisième dispositif d'affichage 55, dont les contours extérieurs sont délimités par l'intersection des bords de la pyramide de vision initiale 20 avec le deuxième écran 55. L'étape de calcul d'une pyramide de vision dynamique 64 peut faire partie du calcul dynamique de transformation conforme 600.

Une quatrième étape du procédé selon l'invention peut être une étape de calcul d'un rendu en deux dimensions 65 pour une scène en trois dimensions 66, ladite scène 3D étant par exemple générée par un logiciel de simulation. Le calcul de rendu 2D est réalise par une fonction de calcul de rendu de la transformation dynamique conforme, aussi nommé deuxième générateur d'images de synthèse 51. Le calcul du rendu 3D de la scène 69 peut notamment utiliser une projection centrale afin de produire une nouvelle image 2D. Le calcul d'un rendu en deux dimensions 65 peut faire partie du calcul de rendu de la transformation dynamique conforme 601. Dans un mode de réalisation de l'invention, la prochaine étape peut être une étape de calcul d'un rendu de la scène 3D 69 adapté à être affiché 602 par le dispositif de représentation 55.

Dans un mode de réalisation particulièrement avantageux, le procédé selon l'invention peut comporter une cinquième étape de calcul de la distorsion dynamique 603, par un opérateur de distorsion dynamique 54 tel que représenté sur la figure 5. Au cours de la cinquième étape 603, pour chaque nouvelle position et orientation de la tête ou pour chaque nouvelle position des yeux de l'observateur, les distorsions à appliquer pour être conforme à la perspective conique, peuvent être calculées. Le calcul de la distorsion dynamique 603 peut faire partie du calcul dynamique de transformation conforme 600.

Une sixième étape du procédé selon l'invention peut être une étape de calcul de rendu après application de la distorsion dynamique 68 calculée au cours de la cinquième étape 603 du procédé selon l'invention. La distorsion réalise un déplacement de pixels sources, c'est-à-dire des pixels de l'image calculée par le générateur d'image 3D ou encore la scène 3D 66, à une nouvelle position pour créer une image destination apte à être affichée sur le deuxième écran 55 par exemple. La position de chaque pixel source peut être définie par ses coordonnées (X_{S}, Y_{S}). Une nouvelle position du pixel source dans l'image de destination peut être définie par de nouvelles coordonnées (X_{D}, Y_{D}). Le calcul de transformation des coordonnées sources en coordonnées à destination s'effectue de façon à toujours préserver la projection centrale, quelque soit la position de l'observateur et ceci pour chaque pixel affiché. Le calcul des paramètres de chaque pixel (X_{S}, Y_{S}), (X_{D}, Y_{D}) peut être réalisé comme suit : pour chaque pixel de la pyramide initiale 20 de coordonnées (X_{S}, Y_{S}), trouver sa position dans l'espace 3D (x,y,z) sur l'écran, puis calculer la position de ce point de l'espace, en coordonnées 3D (x, y, z) dans la nouvelle pyramide de vision dynamique 64, ce qui donne de nouvelles coordonnées écran (X_{D}, Y_{D}).

L'image 2D calculée au cours de la quatrième étape 65 est donc déformée, au cours de la sixième étape en temps réel de façon à rendre imperceptible pour l'observateur un écart géométrique résiduel de chaque pixel observable du rendu 2D par rapport à une perspective conique exacte de la scène 3D. Le calcul de rendu de la distorsion dynamique produit un rendu de la scène 3D 69 adapté à être affiché 602 par le dispositif de représentation 55.

Avantageusement, les différents calculs du procédé selon l'invention peuvent être réalisés en temps réel et sont visuellement imperceptibles pour l'observateur 5.

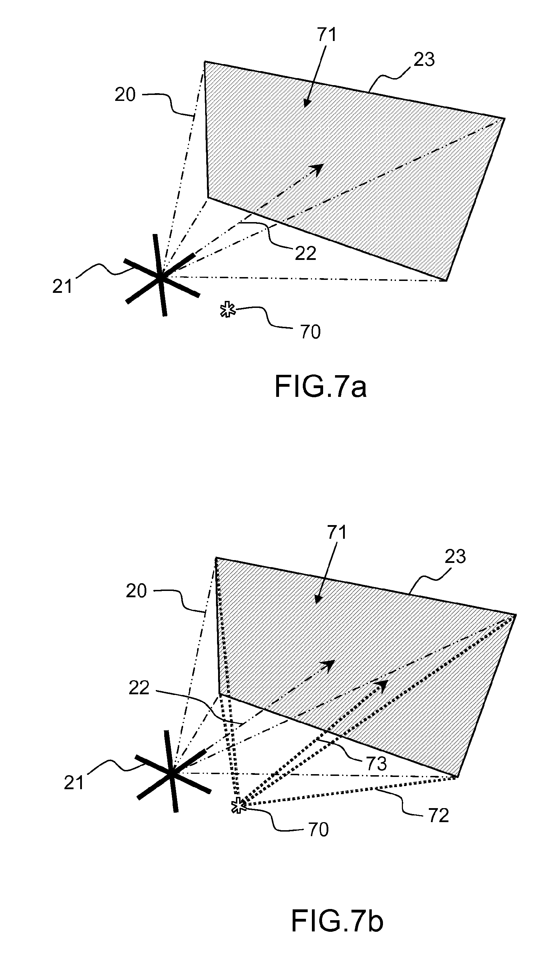

Les figures 7a et 7b illustrent respectivement des exemples de calculs de base des pyramides de vision initiale 20 et dynamique 72. La figure 7a représente la première pyramide de vision initiale telle que représentée également sur la figure 2. La figure 7a représente également une position réelle de l'observateur 70 à un instant donné. La figure 7b représente la première pyramide de vision dynamique 72 calculée au cours de la troisième étape 64 du procédé 60 selon l'invention. La figure 7b représente également la première pyramide de vision initiale 20 telle que représentée sur la figure 7a.

De façon générale, une pyramide de vision 20, 72 est une pyramide orientée selon une ligne de visée 22, 73. Une pyramide de vision peut également être définie par une ouverture angulaire horizontale et une ouverture angulaire verticale. L'origine ou la pointe d'une pyramide de vision 20, 72 est située à une position correspondant à la position d'observation, ou plus généralement la position de l'observateur.

Chaque pyramide de vision 20, 72, a pour origine une position de l'observateur 21, 70 et comme orientation, la direction de la ligne de visée 22, 73. La première surface ou zone d'affichage initiale 23 est une surface appartenant à la surface de l'écran 71, dont les contours sont délimités par l'intersection des bords de la pyramide initiale 20 avec l'écran 71.

A chaque nouvelle position 70 de l'observateur, le procédé selon l'invention recalcule en temps réel une nouvelle pyramide de vision dynamique 72.

Sur les figures 7a et 7b, un premier type de zone d'affichage est représenté. L'écran 71 utilisé est typiquement dans ce cas à base d'écrans plats, formant une première zone d'affichage plane et rectangulaire.

Sur la figure 7b la nouvelle pyramide de vision dynamique est calculée en fonction d'une deuxième ligne de visée 73, sensiblement perpendiculaire à la première zone d'affichage initiale 23. Chaque ligne de visée 73 utilisée pour calculer une nouvelle pyramide de vision dynamique reste sensiblement perpendiculaire à la première zone d'affichage initiale 23. Le calcul d'une nouvelle pyramide de vision dynamique s'effectue en déterminant quatre angles entre les coins de la première zone d'affichage initiale 23, une position courante de l'observateur 70 et une ligne de visée 22, 73 projetées sur des axes sensiblement parallèles aux bords de la première surface d'affichage 23. Avantageusement, une telle construction de pyramide de vision dynamique dans le cas d'un écran plat 71 donne une projection centrale exacte et ne nécessite par conséquence aucune correction de distorsion, et ceci à condition d'utiliser une ligne de visée toujours sensiblement parallèle à la première ligne de visée initiale 22.

Toutefois, lorsque la ligne de visée ne peut être parallèle à la première ligne de visée initiale 22, toujours dans le cas d'un écran plat 23, un opérateur de distorsion dynamique 54, tel que représenté sur la figure 5, permet avantageusement de conserver un affichage calibré. L'opération de distorsion réalisée par l'opérateur de distorsion dynamique 54 au cours de la cinquième étape 603 du procédé selon l'invention s'applique à déformer un polygone à quatre sommets.

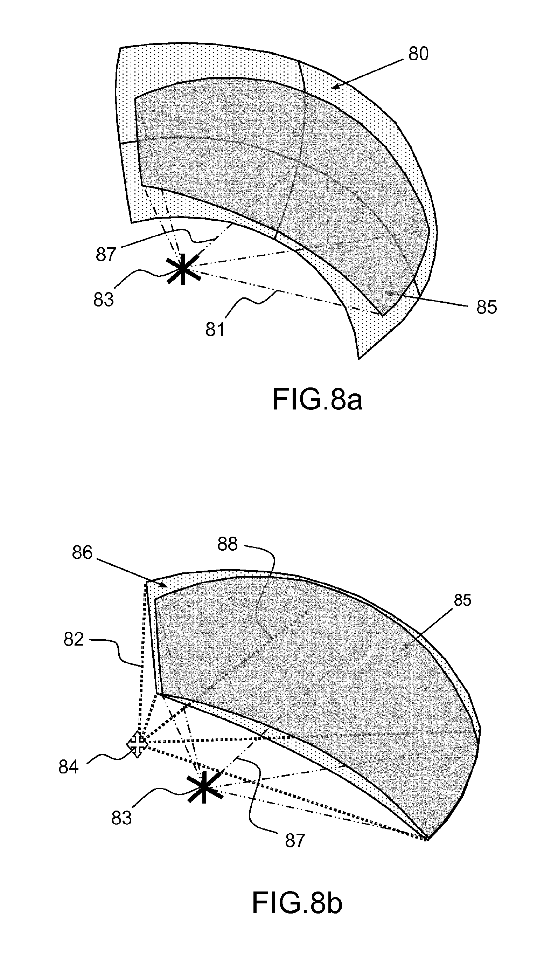

Les figures 8a et 8b représentent des exemples calculs de pyramides de vision initiale et dynamique lorsque l'écran prend une forme quelconque. Par exemple, un troisième écran 80 représenté sur les figures 8a, 8b est un écran sphérique.

Comme sur la figure 7a, 7b, chaque pyramide de vision 81, 82, a pour origine une position de l'observateur 83, 84 et comme orientation, la direction de la ligne de visée 87, 88. Une deuxième surface ou zone d'affichage initiale 85 est une surface appartenant à la surface du troisième écran 80, dont les contours sont délimités par l'intersection des bords d'une deuxième pyramide initiale 81 avec le troisième écran 80. De la même manière, à chaque nouvelle position 83 de l'observateur, le procédé selon l'invention recalcule en temps réel une deuxième nouvelle pyramide de vision dynamique 82. La deuxième nouvelle pyramide de vision dynamique 82 est calculée de manière à ce que l'ouverture de la deuxième nouvelle pyramide de vision dynamique 82 ait la plus petite ouverture englobant la deuxième surface d'affichage initiale 85. Ainsi une nouvelle surface d'affichage 86 englobe en totalité la deuxième surface d'affichage initiale 85.

Avantageusement, lorsque la deuxième nouvelle pyramide de vision dynamique 82 a une ouverture plus grande que la deuxième surface d'affichage initiale 85, l'opérateur de distorsion 54 compense en agrandissant l'image de rendu 2D de manière à préserver la perspective conique exacte.

Avantageusement, l'invention peut être utilisée pour former des conducteurs de grues par exemple, ou d'autres engins de chantier fixe. En effet, la conduite de tel engins nécessite un entrainement avec une fidélité de l'affichage visuel est très importante.

L'invention peut également s'appliquer dans le cadre de l'entrainement de personnel à pied dans le cadre de missions dangereuses qui nécessite un visuel très immersif de faible encombrement.

Le procédé selon l'invention supprime avantageusement les erreurs de parallaxe, et ce, quelle que soit la position de l'observateur devant l'écran. Le procédé selon l'invention permet avantageusement d'obtenir ce résultat en maintenant une perspective conique ou une projection centrale de la scène 3D vue de l'observateur.

De plus, les erreurs de parallaxe sont supprimées quelles que soient la ou les positions de l'écran ou des écrans d'affichage, quel que soit le nombre d'écrans, quelle que soit la forme du ou des écrans d'affichage.

## Revendications

1. Procédé de représentation d'environnements synthétiques (60), adapté à être visualisé par au moins un observateur (5), ledit observateur pouvant être mobile, à partir d'une scène virtuelle en trois dimensions (66), comportant les étapes suivantes :
- une étape de calibrage d'un dispositif d'affichage pour la représentation synthétique de la scène virtuelle ;
- une étape de construction (62) d'une pyramide de vision initiale (20), la pyramide de vision initiale :
○ étant orientée selon une ligne de visée initiale, ladite ligne de visée initiale étant sensiblement perpendiculaire à un écran du dispositif d'affichage ;
○ ayant pour origine une position d'observation initiale ; et
○ définissant une zone d'affichage initiale par son intersection avec l'écran ;
- une étape de description des caractéristiques physiques (61) du dispositif d'affichage (55) ;
ledit procédé est **caractérisé en ce qu'il** comporte en outre les étapes suivantes :
- une première étape de détermination d'une position d'observation (67) à chaque mouvement de l'observateur (5) ;
- une deuxième étape de calcul d'une nouvelle pyramide de vision dynamique (64) en fonction de la position d'observation, ladite nouvelle pyramide de vision dynamique résultant d'un calcul dynamique de transformation conforme (600), la pyramide de vision dynamique étant calculée en minimisant son ouverture de façon à englober la zone d'affichage initiale ;
- une troisième étape de calcul d'un rendu en deux dimensions (65) de la scène virtuelle en trois dimensions par une fonction de calcul de rendu de la transformation dynamique conforme (601) prenant en compte la nouvelle pyramide de vision dynamique (64) ;
- une quatrième étape d'affichage par un dispositif d'affichage calibré (55) du rendu en deux dimensions de la scène virtuelle.

2. Procédé selon la revendication 1, **caractérisé en ce qu'il** comporte une étape de calcul d'une distorsion dynamique (603) en fonction de la position d'observation, suivie d'une étape d'application de la distorsion dynamique (68) sur le rendu en deux dimensions de la scène virtuelle (65), calculant un nouveau rendu conforme à la perspective conique.

3. Procédé selon l'une quelconque des revendications 1 et 2, **caractérisé en ce que** la première étape de détermination d'une position d'observation comporte une étape de détection d'une nouvelle position de l'observateur, une étape de calcul d'une nouvelle position d'observation.

4. Procédé selon la revendication 3, **caractérisé en ce que** la position d'observation est déduite d'une détection d'une nouvelle position de la tête de l'observateur (5).

5. Procédé selon la revendication 3, **caractérisé en ce que** la position d'observation est déduite d'une détection d'une nouvelle position des yeux l'observateur (5).

6. Dispositif de représentation d'environnements synthétiques (60), adapté à être visualisé sur un écran par au moins un observateur (5), ledit observateur pouvant être mobile, à partir d'une scène virtuelle en trois dimensions (66), ledit dispositif comportant au moins :
- un détecteur de positions (57) de l'observateur (5) ;
- un générateur d'image de synthèse (51), comportant :
○ au moins une base de données (52) stockant une pyramide de vision initiale, et la scène virtuelle en trois dimensions, la pyramide de vision initiale définissant une zone d'affichage initiale par son intersection avec l'écran ;
○ au moins un processeur graphique (53) calculant un premier rendu en deux dimensions de la scène en trois dimensions à partir d'une pyramide de vision dynamique ;
- un module de calcul d'une transformation dynamique conforme (56) prenant en entrée la pyramide de vision initiale, une description physique du dispositif d'affichage (55) et fournissant au processeur graphique (53) la pyramide de vision dynamique, calculée en fonction d'une position d'observation déduite d'une position de l'observateur, et calculée en minimisant son ouverture tout en englobant la zone d'affichage initiale ;
- un dispositif d'affichage calibré (55) affichant le premier rendu en deux dimensions de la scène en trois dimensions.

7. Dispositif selon la revendication 6, **caractérisé en ce qu'il** comporte en outre un opérateur de distorsion dynamique prenant en entrée le rendu en deux dimensions de la scène en trois dimensions et appliquant une distorsion dynamique fonction de caractéristiques physiques du dispositif d'affichage et de la position d'observation de manière à produire un deuxième rendu en deux dimensions conforme à la perspective conique, ledit rendu en deux dimensions étant affiché par le dispositif d'affichage calibré (55).
